# DEMANDE DE BREVET EUROPEEN

(11) **EP 0 549 413 A1**
(43) Date de publication de la demande: **30.06.1993**
(21) Numéro de dépôt: 92403414.3
(22) Date de dépôt: 15.12.1992
(51) Int. Cl.: C02F 1/78, C02F 1/72

(54) **Procédé de traitement de l'eau destiné à éliminer les virus et les pesticides**

(30) Priorité: 20.12.1991 FR 9115933
(71) Demandeur: TRAILIGAZ"Cie GENERALE DE L'OZONE", F-95140 Garges-Les-Gonesse (FR)
(72) Inventeur: Bablon, Guy, F-78810 Feucherolles (FR); Hotelier, Jean, F-92260 Fontenay aux Roses (FR); Perrot, Jean-Yves, F-95820 Bruyeres sur Oise (FR); Tanghe, Noel, F-95110 Sannois (FR)
(74) Mandataire: Le Guen, Gérard

(57) **Abrégé**

Procédé de traitement de l'eau permettant à la fois une élimination substantielle des virus et une élimination substantielle des pesticides, du type comprenant à la fois un traitement par l'ozone et par un peroxyde, caractérisé en ce que, dans une première étape, on injecte uniquement l'ozone dans l'eau à traiter puis, dans une deuxième étape, dans l'eau traitée contenant encore de l'ozone on injecte le peroxyde.

## Description

La présente invention concerne un procédé de traitement de l'eau et notamment un procédé permettant à la fois une élimination substantielle des virus et une élimination substantielle des pesticides.

Parmi les principaux contaminants de l'eau on trouve actuellement des pesticides et tout particulièrement des pesticides azotés tels que l'atrazine et la simazine qui sont utilisés en grandes quantités en agriculture.

Récemment, J.P. Duguet et coll. (Removal of atrazine from the river Seine by the ozone-hydrogen peroxide combination in a full scale plant. 10th Ozone World Congress, Monaco, mars 1991) ont proposé, pour éliminer des pesticides tels que l'atrazine, un traitement simultané par l'ozone et le peroxyde d'hydrogène. Un tel traitement simultané par l'ozone et le peroxyde d'hydrogène avait déjà été utilisé pour éliminer de l'eau, des odeurs et des goûts (par exemple D.W. Ferguson et coll., AWWA, Avril 1990, 181). En pratique, dans un tel procédé, on injecte d'abord le peroxyde d'hydrogène dans l'eau puis on injecte l'ozone dans cette eau.

On a par ailleurs décrit dans FR-A-2 563 208 un procédé de traitement de l'eau destiné à dégrader les matières organiques contenues dans l'eau et qui consiste essentiellement à injecter successivement dans l'eau de l'ozone, du peroxyde d'hydrogène, puis à nouveau de l'ozone.

La présente invention est basée sur la découverte qu'il est possible d'obtenir une élimination plus efficace des pesticides si, au lieu d'effectuer un traitement simultané par l'ozone et le peroxyde d'hydrogène, on effectue d'abord le traitement par l'ozone et on n'injecte qu'ensuite le peroxyde d'hydrogène, à un moment où l'eau contient encore de l'ozone.

La présente invention a ainsi pour objet un procédé de traitement de l'eau permettant à la fois une élimination substantielle des virus et une élimination substantielle des pesticides, du type comprenant à la fois un traitement par l'ozone et par un peroxyde, caractérisé en ce que, dans une première étape,on injecte uniquement l'ozone dans l'eau à traiter puis, dans une deuxième étape, dans l'eau traitée contenant encore de l'ozone on injecte le peroxyde.

On injecte avantageusement le peroxyde dans l'eau traitée par l'ozone qui contient encore de 0,4 à 3 mg/l d'ozone et de préférence de 0,5 à 1,5 mg/l d'ozone.

Par élimination substantielle des virus et élimination substantielle des pesticides, on désigne une élimination qui répond aux normes européennes (0,1 µg/l par substance individualisée et 0,5 µg/l au total).

Par peroxyde, on désigne le peroxyde d'hydrogène ainsi que les peroxydes métalliques tels que le peroxyde de sodium, qui ont une activité équivalente à celle du peroxyde d'hydrogène.

Le procédé selon l'invention permet en outre d'effectuer de façon simple dans la première étape une élimination substantielle des virus, alors que dans le procédé où l'on injecte l'ozone dans de l'eau contenant le peroxyde d'hydrogène, il faut contrôler étroitement les paramètres et notamment le rapport O₃/H₂O₂ ainsi que la teneur résiduelle en ozone. Cela permet en particulier d'éviter les problèmes de dégazage et supprime les éventuelles "embolies" sur les filtres. En pratique, on peut injecter les quantités habituelles d'ozone, soit généralement 3 mg/l d'ozone pour un temps de traitement de 4 minutes.

Le procédé selon l'invention présente en outre l'avantage de pouvoir être adapté sans difficulté sur les installations d'ozonation existantes. Pour cela, il suffit de disposer à la sortie du bac d'ozonation une canne d'injection par laquelle est injecté le peroxyde, avantageusement après dilution par de l'eau de façon à injecter un volume relativement important, ce qui facilite le mélange peroxyde/ eau ozonée.

Pour les nouvelles installations, le procédé selon l'invention permet de diminuer considérablement le volume de ces installations car les installations d'ozonation sont maintenant de taille réduite.

Le procédé selon l'invention permet en outre d'effectuer une régulation du traitement par le peroxyde en mesurant le potentiel redox à la fin de la deuxième étape.

On décrira ci-après l'invention de façon plus détaillée en se référant aux figures, sur lesquelles :
- la Fig. 1 est un schéma d'une installation pour la mise en oeuvre du procédé selon l'invention,
- la Fig. 2 est une vue schématique en perspective d'une installation modifiée pour la mise en oeuvre du procédé.

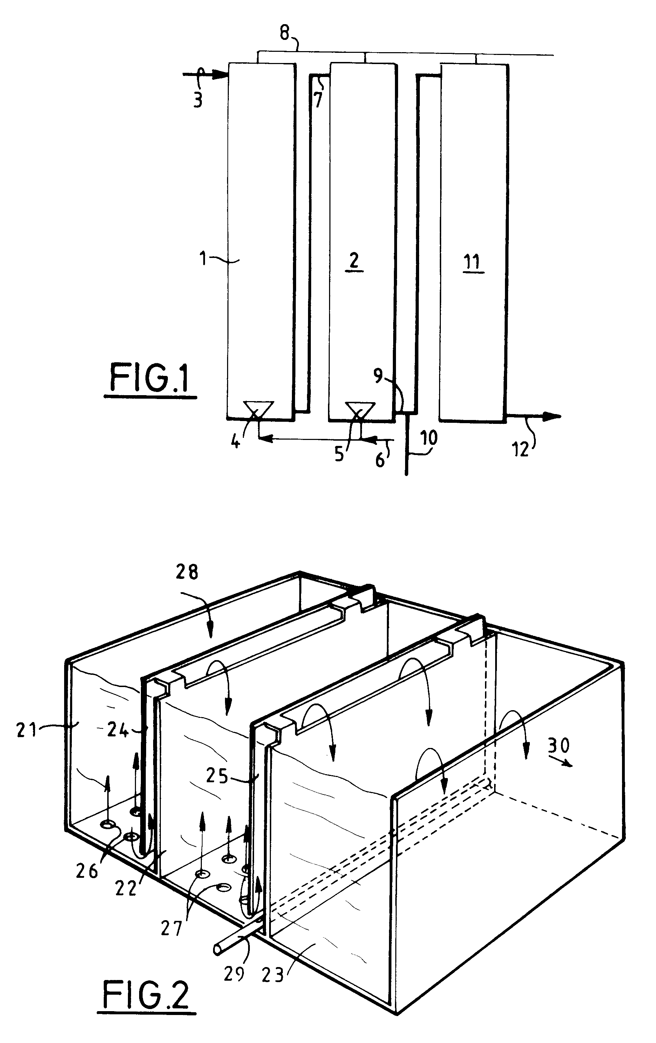

L'installation représentée sur la Fig. 1 comprend deux colonnes 1 et 2 d'ozonation. L'eau à traiter est introduite en haut de la colonne 1 par une conduite 3. Les dispositifs d'injection 4 et 5 alimentés en air ozoné par l'intermédiaire d'une conduite 6 sont disposés au bas des colonnes 1 et 2. L'eau à traiter circule de haut en bas dans la colonne et elle est renvoyée par une conduite 7 vers le haut de la colonne 2. L'air ozoné est évaué par une conduite 3.

L'eau ozonée sort au bas de la colonne 2 par une conduite 9 dans laquelle est injectée un mélange d'eau et de peroxyde d'hydrogène par l'intermédiaire d'une conduite 10.

La conduite 9 amène le mélange en haut d'une colonne 11 de traitement par le peroxyde d'hydrogène. L'eau traitée est évacuée au bas de la colonne 11 par une canalisation 12.

On a réalisé des essais dans une installation pilote de ce type, les conditions étant les suivantes :
- débit d'eau : 450 l/h
- débits d'air : 2 x 100 Nl/h
- taux d'ozone appliqué : 3,5 mg/l
- résiduel d'ozone avant injection de H₂O₂ : 0,93 mg/l
- concentration d'H₂O₂ injecté : 0,82 mg/l
- temps de contact par colonne : environ 4 minutes.

Les résultats obtenus ont été les suivants avec une concentration à l'entrée en atrazine de 500 ng/l :
- taux de réduction de la concentration en atrazine
   sans injection de peroxyde : 67 %
   avec injection de peroxyde : 92 %
- résiduel après traitement couplé :
   O₃ : 0 mg/l
   H₂O₂ : 0,11 mg/l.

L'installation représentée sur la Fig. 2 est une installation existante modifiée pour mettre en oeuvre le procédé selon l'invention.

L'installation comprend trois cuves parallèles 21, 22 et 23 et entre les cuves 21 et 22 et les cuves 22 et 23, sont ménagés des couloirs verticaux 24 et 25. Des dispositifs d'injection 26 et 27 alimentés en air ozoné sont disposés au fond des cuves 1 et 2. L'eau à traiter se déverse sur le bord 28 de la cuve 1 et circule vers le bas dans cette cuve. Elle y subit une première ozonation. L'eau passe ensuite dans le couloir 24 et elle se déverse dans la cuve 22 où l'ozonation se poursuit.

Au bas du couloir 25 est disposée une canne d'injection 29 comportant des orifices d'injection régulièrement répartis (par exemple des orifices de 2,5 mm espacés de 100 mm et inclinés de 45° par rapport à la verticale). Par ces orifices est injecté un mélange de peroxyde d'hydrogène et d'eau.

Le mélange eau ozonée/peroxyde d'hydrogène remonte par le couloir 25 pour se déverser dans la cuve 23 où s'effectue le traitement par le peroxyde d'hydrogène. L'eau traitée est évacuée en 30.

## Revendications

1. Procédé de traitement de l'eau permettant à la fois une élimination substantielle des virus et une élimination substantielle des pesticides, du type comprenant à la fois un traitement par l'ozone et par un peroxyde, caractérisé en ce que, dans une première étape, on injecte uniquement l'ozone dans l'eau à traiter puis, dans une deuxième étape, dans l'eau traitée contenant encore de l'ozone on injecte le peroxyde.

2. Procédé selon la revendication 1, caractérisé en ce que l'on injecte le peroxyde dans l'eau traitée contenant encore de 0,4 à 3 mg/l d'ozone.

3. Procédé selon la revendication 2, caractérisé en ce que l'on injecte le peroxyde dans l'eau traitée contenant encore de 0,5 à 1,5 mg/l d'ozone.

4. Procédé selon l'une quelconque des revendications précédentes, caractérisé en ce qu'on injecte le peroxyde après dilution dans de l'eau.

5. Procédé selon l'une quelconque des revendications précédentes, caractérisé en ce qu'on injecte le peroxyde par une canne présentant des orifices d'injection régulièrement répartis.

6. Procédé selon l'une quelconque des revendications précédentes, caractérisé en ce que l'on régule l'injection de peroxyde par mesure du potentiel redox à la fin de la deuxième étape.
